# EUROPÄISCHE PATENTSCHRIFT

(11) **EP 1 218 266 B1**
(45) Veröffentlichungstag und Bekanntmachung des Hinweises auf die Patenterteilung: **10.03.2004**
(21) Anmeldenummer: 00972598.7
(22) Anmeldetag: 21.09.2000
(51) Int. Cl.: B65G 1/137, B65G 1/04

(54) **BEDIENGERÄT FÜR EIN REGALLAGER**
OPERATOR DEVICE FOR A SHELVING STORAGE SYSTEM
GERBEUR POUR SYSTEME DE STOCKAGE A RAYONNAGES

(30) Priorität: 29.09.1999 DE 19946781
(43) Veröffentlichungstag der Anmeldung: 03.07.2002
(73) Patentinhaber: Swisslog (Deutschland) GmbH, 71634 Ludwigsburg (DE)
(72) Erfinder: LANG, Hartmut, 73249 Wernau (DE)
(74) Vertreter: Rösler, Uwe, Dipl.-Phys.
(86) Internationale Anmeldenummer: PCT/DE2000/003283
(87) Internationale Veröffentlichungsnummer: WO 2001/023282

(56) Entgegenhaltungen:
- EP-A- 0 574 732
- DE-A- 4 343 631
- GB-A- 1 449 266

## Beschreibung

Beispielsweise in Apotheken werden Regallager benötigt, die in der Lage sind, auf vergleichsweise engem Raum eine extrem große Vielzahl unterschiedlicher Produkte wiederauffindbar zu lagern. Die zu lagernden Produkte sind zu einem sehr großen Teil in Apotheken überhaupt nur in einem einzigen Exemplar vorhanden und außerdem unterscheiden sich die Abmessungen von Produkt zu Produkt. Es ergibt praktisch kaum unterschiedliche Produkte mit gleichen Abmessungen der sie aufnehmenden Verpackung.

Zum Lagern dieser Produkte ist es bekannt sogenannte Ziehschränke zu verwenden. Diese bestehen aus einer Zarge oder einem Korpus, in dem ein Fachböden aufweisender Zieheinsatz längsverschieblich aufgehängt ist. Solche Ziehschränke können nur in solchen Apotheken verwendet werden, in denen die Offizin ausreichend Platz zum Aufstellen der Ziehschränke bietet. Sobald die Fläche kleiner wird, muss die Lagerung der Produkte anderen Orts geschehen. Damit entsteht das Problem, die Produkte vom Lager in die Offizin zu schaffen. Des weiteren müssen die Produkte aus dem Regallager in das Transportvehikel geschafft werden bzw. neue Produkte in dem Regallager verteilt werden.

Die klassischen Ziehschränke eigenen sich hierzu weniger, denn zufolge der stark unterschiedlichen Verpackungsgrößen sind die Schränke unnötig voluminös. Der größte Teil innerhalb der Schränke ist ungenutzter Raum. Darüber hinaus können die Schränke nicht für eine automatisierte Auslagerung von gewünschten Produkten auf eine Fördereinrichtung herangezogen werden.

Aus der Praxis ist ein automatisiertes Regallager, insbesondere zur Anwendung im Apothekenbereich, bekannt, bei dem an Stelle der Ziehschränke sehr lange ebene Regalböden verwendet werden, auf denen die Produkte abgelegt werden. Die Speicherung in diesem Lager erfolgt chaotisch unter Verwendung eines Lagerverwaltungssystems. In dem Verwaltungssystem wird der Ort des gewünschten Produktes aufbewahrt. Die Koordinaten des Ortes sind die Nummer des betreffenden Fachbodens und der Abstand gemessen in Metern von einem Bezugspunkt, meistens dem Regalbodenanfang. Diese Daten werden an ein Regalbediengerät übermittelt, das entsprechend der Meterangabe an dem Regalfach entlang fährt, um dann mit Hilfe eines Sauggreifers das Produkt auf das Regalbediengerät zu ziehen.

Der praktische Betrieb mit diesem System hat eine Reihe von Schwächen gezeigt. Gelegentlich sind die Verpackungen nicht einwandfrei geschlossen. Beim Versuch, die Verpackung auf das Regalbediengerät zu ziehen, öffnet der Sauggreifer die Lasche. Damit ist eine ordnungsgemäße Bewegung des Produktes nicht mehr gewährleistet.

Wenn der Knickfalz der Lasche oben ist, stellt sich die Verpackung im Spalt zwischen dem Regalbediengerät und dem Fachboden schräg und der Inhalt entleert sich auf den Boden.

Liegt der Knickfalz der Lasche an der Seite, wird beim Ziehen die Verpackung gelegentlich schief gezogen und stößt dann benachbarte Produkte an. Da auch diese nur lose auf dem ebenen Fachboden aufliegen, werden sie aus ihrer Position gedrückt. Bei dem nachfolgenden Versuch die schräggestellte Nachbarpackung zu fassen, sind die Greifer nicht in der Lage, die Verpackung ordnungsgemäß anzusaugen. Dazu darf ihr Schrägwinkel nicht größer als höchstens 5° bis 10° betragen. Andernfalls können die Greifer die Packung nicht fassen.

Wenn bei dem bekannten System eine Störung auftritt, muss das Regalbediengerät in eine Endstellung gebracht werden und das Personal muss sich in den Gang begeben, in dem normalerweise das Regalbediengerät fährt, um dort selbst die Verpackungen nach der Angabe der oben genannten Koordinaten aus dem Regallager entnehmen. Hierbei besteht eine weitere Gefahr zufällig an den abgelagerten Produkten zu streifen und sie dabei aus ihrer Position zu bringen. Jedes aus der Solllage gebrachtes Produkt muss nach dem Wiederanlaufen des automatischen Betriebs erneut in das Regallager eingegeben werden.

Die stark unterschiedlichen Verpackungsgrößen und die stark unterschiedlichen Gewichte, die zwischen wenigen Gramm und fast einem halben Kilogramm variieren bedingen weitere Schwierigkeiten bei den Sauggreifern für die Produkte.

Bei dem bekannten System kann außerdem die räumliche Tiefe des Fachbodens, die zum Ablegen der größten zulässigen Verpackung dimensioniert ist, nicht dazu ausgenutzt werden, mehrere kleine Verpackungen hintereinander zu lagern, weil es praktisch unmöglich ist, auf ein in der zweiten Reihe liegendes Produkt zu zugreifen. Das bekannte System ist im übrigen dafür auch nicht ausgerüstet.

Demgegenüber wird in der EP 0 574 732 A1 ein Warenlager zur Lagerung von Stückgut beschrieben, in dem die Regale so tief sind, dass mehrere Stückgutteile hintereinander auf einer gemeinsamen Auflageplatte abgelegt werden können. Zum Ein- und Auslagern wird diese Auflageplatte soweit in das Regalbediengerät gezogen, dass eine Umsetzvorrichtung das betreffende Stückgut von der Auflageplatte in einen Auslagerabschnitt oder von einem Einlagerabschnitt auf die Auflageplatte schiebt. Anschließend wird die Auflagerplatte wieder in den Lagerplatz zurück verfahren. Nachteilig an dem beschriebenen System ist, dass die Stückgüter auf dem Regalbediengerät auf zusätzlichen Produktträgern abgestellt werden, wodurch das Regalbediengerät schwerer wird, und dem Lager insgesamt Nutzvolumen verloren geht. Darüber hinaus erfolgt bei jedem Ein- und Auslagerungsvorgang das Aus- und Einfahren der gesamten Auflageplatte, so dass die entsprechenden Vorgänge viel Zeit benötigen.

Ausgehend hiervon ist es Aufgabe der Erfindung ein Regallager mit Bediengerät zu schaffen, mit dem Ein- und Auslagerungsvorgänge schnell und flexibel realisiert werden können. Insbesondere soll das Regallager im Hinblick auf den zur Verfügung stehenden Lagerraum optimiert und die Verwendung zusätzlicher Trägereinheiten für die Stückgüter weitgehend vermieden werden.

Diese Aufgabe wird erfindungsgemäß durch das Regallager mit den Merkmalen des Anspruches 1 gelöst.

Bei dem Bediengerät des neuen Regallagers werden verschwenkbare bzw. längsverschiebliche Finger verwendet, die jedoch ansonsten passiv sind. Sie wirken nur schiebend oder haltend auf die Produkte ein. Die Finger werden nicht dazu verwendet, die Produkte unmittelbar ziehend zu bewegen. Um die Produkte aus dem Regallager auf das Regalbediengerät zu schaffen, wird ein Produktträger eingesetzt, der aus dem Regalfach mit Hilfe des Fingers herausgezogen wird und auf dem ein oder mehrere Produkte abgelegt sind.

Auf diese Weise wird jegliche Gefahr vermieden, Verpackungen zu öffnen, weil in ziehender Weise auf die Verpackung eingewirkt wird. Soweit sie aus dem Regalfach entnommen werden, bleiben sie ruhig auf dem Produktträger liegen. Sie kommen mit dem Betätigungsfinger nicht unmittelbar in Berührung.

Der Haltefinger dient dazu, die Produkte von dem Produktträgern abzustreifen, damit sie unmittelbar auf dem Regalbediengerät zu liegen kommen. Sie können sodann mit Hilfe desselben Betätigungsfingers, der auch den Produktträger bewegt, von dem Regalbediengerät herunter geschoben werden, entweder in ein Ausgabesystem oder, wenn es um eine Separierung vom mehreren Produkten geht, auf einen in einem Regalfach liegenden Produktträger.

Das Auflager des Regalbediengerätes ist so gestaltet, dass wahlweise entweder Produktträger darauf abgelegt werden oder Produkte unmittelbar d.h. ohne Produktträger

Da das neue Regallager mit einem Betätigungsfinger arbeitet, der ausschließlich schiebend auf die Produkte unmittelbar einwirkt, können auch Produkte bewegt werden, die keine glatten Flächen zum Ansetzen eines Sauggreifers aufweisen. Beispiele hierfür sind unverpackte Flaschen, bei denen sich weder der Verschluss zum Ansetzen des Sauggreifers eignet noch der Boden, der infolge des Herstellungsverfahrens Schweißnähte oder andere Unebenheiten zeigt.

Das Zusammenspiel mit dem Regalbediengerät und der Steuerung werden besonders einfach, wenn sämtliche Produktträger dieselbe Länge aufweisen gemessen in Richtung senkrecht zu einer Ebene, in der sich das Regalbediengerät beim Positionieren von einem Regalfach auf ein anderes Regalfach bewegt.

Eine weitere Vereinfachung wird erreicht, wenn das Regalfach und der Produktträger jeweils mit zusammenspielenden Führungsmitteln ausgerüstet ist. Unabhängig von der Präzision beim Zurückgeben des Produktträgers in das Regalfach wird der Produktträger in die richtige Lage gezwungen. Auch Erschütterungen oder sonstige von Hand erforderliche Eingriffe an dem Regallager können die Produktträger nicht aus ihrer Solllage bringen. Insbesondere bei Störungen können die Produktträger von Hand in das Regalfach eingegeben werden und haben zwangsläufig die für den Betrieb erforderliche richtige Stellung.

Besonders einfach Führungsmittel werden erreicht, wenn die Geometrie des Fachbodens und der Unterseite des Produktträgers die gewünschte Positionierung bereits erzwingen, während eine Bewegung in Längsrichtung des Produktträgers auf Grund der Geometrie nicht verhindert wird. Im einfachsten Falle ist das Führungsmittel im Fachboden eine Rinne, die sich über die gesamte Breite des Fachbodens erstrecken kann, während der Produktträger auf eine Winkelschiene reduziert wird.

Eine zwangsläufig richtige Lage des Produktes auf dem Produktträger wird erreicht, wenn seine Oberseite eine entsprechende Geometrie aufweist. Im Falle der Winkelschiene ergibt sich dies aus dem V-förmigen Querschnitt. Dieser ermöglicht auch die exakte Ablage von zumindest angenäherten zylindrischen Gegenständen, wie Flaschen, Ampullen und dergleichen. Auch Flaschen, die sich bereits in geringem Abstand von dem Boden in Richtung auf den Verschluss verjüngen und wie sie üblicherweise als Kunststofflaschen in Labors verwendet werden, können ohne Störungen in dem neuen Regallager aufbewahrt und aus dem Regallager genommen werden, weil sie in jedem Falle lagerichtig auf dem Produktträger fixiert gehalten werden.

Wenn sämtliche Produktträger dieselbe Länge aufweisen, ist es auch zweckmäßig, die Regalfächer mit derselben Länge zu versehen und lediglich ihre Weite zu variieren.

Die Koppelmittel zum Koppeln des Betätigungsfingers mit einem Produktträger besteht im einfachsten Fall aus einer Öffnung oder aus einer Ausnehmung an der Unterseite des Produktträgers und einem entsprechenden Haken am Betätigungsfinger. Um diese beiden Konstruktionselemente miteinander in Eingriff bringen zu können, muss der Produktträger hinreichend über das Regalfach vorstehen. Damit dies auch beim Einsetzen von Hand gewährleistet ist, ist der Produktträger zweckmäßigerweise etwas länger, damit er, wenn er an einer hinteren Begrenzung des Regalfaches anstößt, die wegen der Halterung des Regalfaches ohnehin vorhanden ist, in der erforderlichen Weise über das Regalfach übersteht.

Die Unterbringung des Betätigungsfingers am Bediengerät und die Kopplung mit dem Produktträger bzw. mit dem Produkt wird besonders einfach, wenn der Finger durch einen Spalt in dem Auflager nach oben vorsteht. Auf diese Weise braucht keine Rücksicht auf die Querabmessungen genommen zu werden, weil sich ein Teil des zu manipulierenden Produktes ohnehin in der Nähe des Spaltes befinden wird, insbesondere dann, wenn der Spalt an der tiefsten Stelle des Auflagers ausgebildet ist.

Um mit einem einzigen Betätigungsfinger alle erforderlichen Operationen durchführen zu können, ist der Betätigungsfinger außer in die Ruhestellung hin, in wenigstens zwei angehobene Stellungen zu bringen, nämlich eine Stellung in der er mit dem Produktträger in Eingriff kommt, ohne diesen anzuheben und in eine stärker angehobene Stellung, in der er an dem Produkt zur Anlage gebracht werden kann.

Der Haltefinger zum Abstreifen des Produktes vom Produktträger wird zweckmäßigerweise am Regalbediengerät gelagert, weil dann zur Bedienung aller Regalfächer zu einer Seite des Regalbediengerätes nur ein Haltefinger benötig wird. Grundsätzlich wäre es auch denkbar derartige Haltefinger an den Regalfächern vorzusehen und mehr oder weniger synchron zu bewegen.

Das Regalbediengerät kann auch an beiden Seiten mit je einem Haltefinger ausgerüstet werden, damit Regalfächer zu beiden Seiten des Regalbediengerätes in gleicherweise bedient werden können.

Der Abstand der Haltefinger von einander, ist, wenn von einem einzigen Antriebssystem betätig werden, zweckmäßigerweise deutlich größer als es der Länge eines Produktträgers entspricht.

Im übrigen sind Weiterbildungen der Erfindung Gegenstand von Unteransprüchen.

In der Zeichnung ist ein Ausführungsbeispiel des Gegenstandes der Erfindung dargestellt. Es zeigen:
Fig. 1 das erfindungsgemäße Regallager in einer schematisierten, perspektivischen Darstellung, wobei ein Ziehgestell teilweise ausgezogen ist,
Fig. 2 einen der Produktträger des Regallagers nach Fig. 1,
Fig. 3 das Regalbediengerät des Regallagers nach Fig. 1 in einer perspektivischen, vergrößerten Darstellung,
Fig. 4 das Regalbediengerät nach Fig. 3 in einer Ansicht von den Regalfächern her,
Fig. 5 den Betätigungsfinger des Regalbediengerätes nach Fig. 3 in einer vergrößerten, perspektivischen Darstellung, und
Fig. 6 bis 11 den Vorgang des Ein- und Auslagerns an Hand von stark schematisierten Ausschnittsdarstellungen, wobei alle für das Verständnis des Entnahmevorgangs nicht wesentlichen Teile weggelassen sind.

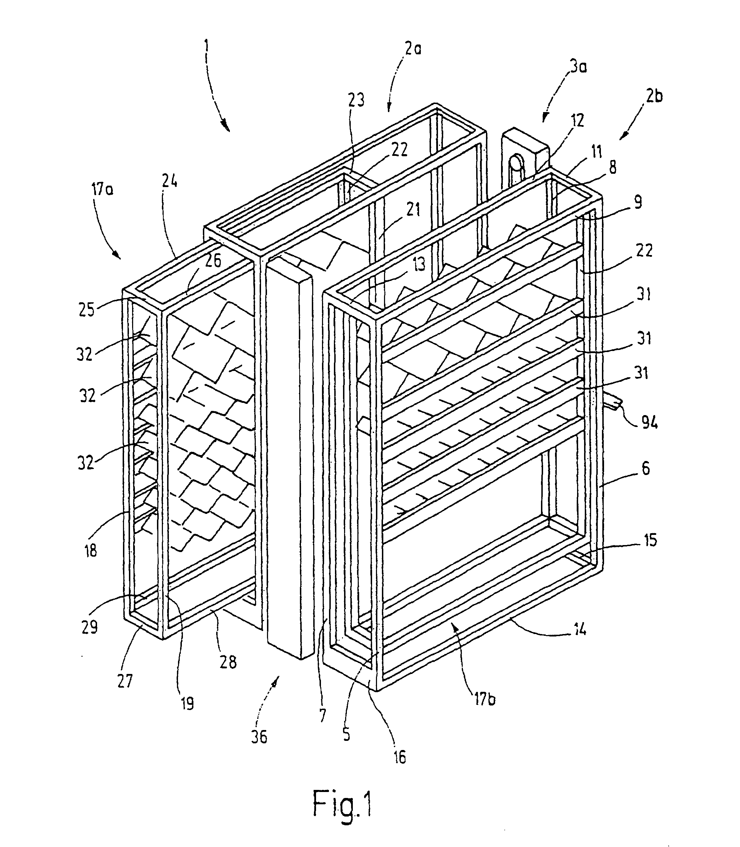

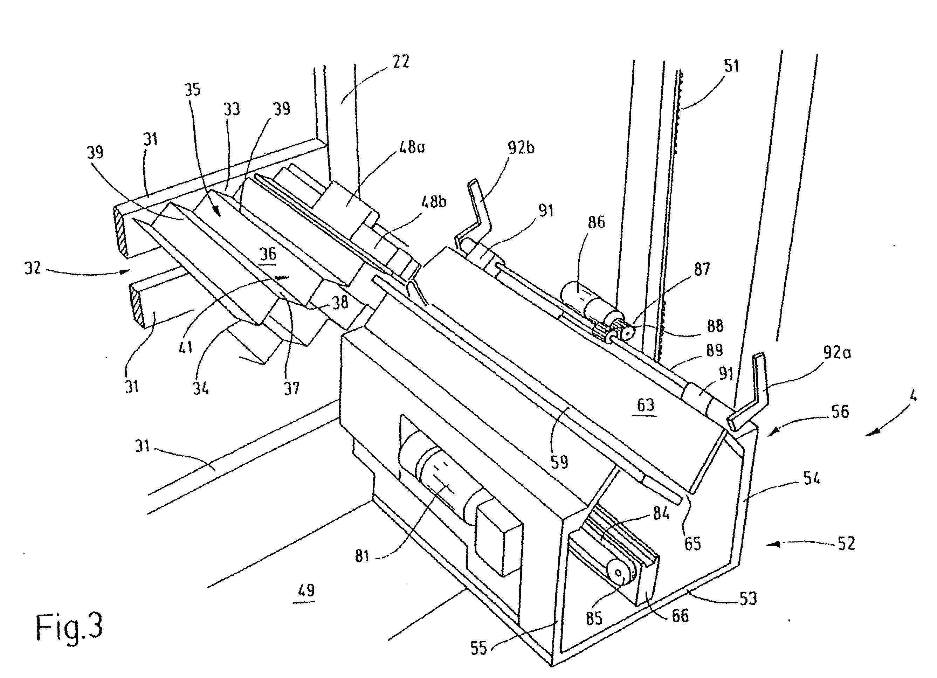

In der Fig. 1 ist perspektivisch und schematisiert ein Regallager 1 veranschaulicht. Zu dem Regallager 1 gehören zwei einander gegenüberstehende Regalgestelle 2a und 2b, die sich mit ihrer Breitseite im Abstand gegenüberstehen, wobei in dem Zwischenraum zwischen den beiden Regalgestellen 2a und 2b zwei vertikale Pfeiler 3a und 3b aufragen, an denen ein Regalbediengerät 4 (Fig. 3) vertikal geführt ist.

Jedes der beiden Regalgestelle 2 hat eine quaderförmige Außengestalt, wobei von dem Quader lediglich dessen Kanten existieren.

Das Regalgestell 2b setzt sich aus vier vertikal aufragenden Pfeilern 5, 6, 7 und 8 zusammen, die an ihren Enden durch jeweils vier Querstreben 9, 11, 12 und 13 oben und entsprechende Querstreben unten verbunden sind, von denen lediglich die Querstreben 14, 15 und 16 erkennbar sind. Die Pfeiler 5...8 und die Querstreben 9...16 sind jeweils an den Ecken mit einander verschraubt oder verschweißt.

Das Regalgestell 2a ist in der gleichen Weise mit denselben Abmessungen aufgebaut, weshalb sich eine erneute Erläuterung erübrigt; die Bezugszeichen des Regalgestells 2b gelten in der gleichen Weise für die spiegelbildlichen Konstruktionselemente des Regalgestells 17b gelten.

In jedem der beiden Tragegestelle 2a und 2b sind zwei Ziehgestelle 17a und 17b längsverschieblich untergebracht. Sie sind beispielsweise mittels nicht gezeigter aber an sich bekannter Kugelführungen in dem Regalgestell 2 an dessen oberen Ende aufgehängt, wozu diese Führungen zweckmäßiger Weise im Bereich der oberen Querstreben 9 und 12 angebracht sind. Auf diese Weise sind die Ziehgestelle 17, wie am Beispiel des Ziehgestells 17a in Fig. 1 zu erkennen ist, zu der dem Betrachter zugekehrten Schmalseite der beiden Regalgestelle 2 herausziehbar. Ein Herausziehen in der entgegengesetzten Richtung ist gesperrt, damit die beiden Ziehgestelle 17 im eingeschobenen Zustand eine definierte Endelage in dem betreffenden Regalgestell 2 aufweisen.

Der Abstand zwischen den Pfeilern 5 und 7 ist groß genug, damit ein Herausziehen des schmäleren Ziehgestells 17 möglich ist.

Ähnlich wie das Regalgestell 2 ist das Ziehgestell 17a ein quaderförmiges Gebilde, von dem lediglich die Kanten in Gestalt von vertikal verlaufenden Streben 18, 19, 21, 22 und an den jeweiligen Enden angeordnete Querstreben 23...29 bestehen. Wegen der Darstellung ist die hintere, untere Querstrebe des Ziehgestells 17a verdeckt.

Das Ziehgestell 17b ist in der identischen Weise ausgeführt, wie das Ziehgestell 17a weshalb sich eine erneute Beschreibung erübrigt und die Bezugszeichen des Ziehgestells 17a in der gleichen Weise für die spiegelbildlichen Konstruktionselemente des Ziehgestells 17b gelten.

Wie Fig. 1 weiter zu entnehmen ist, bilden sowohl das Regalgestell 2 als auch das Ziehgestell 17 jeweils relativ große Flachseiten, die in jeder Betriebsstellung zu einander parallel ausgerichtet sind. Diese Flachseite ist beispielsweise bei dem Regalgestell 2 von den Pfeilern 7 und 8 der oberen Querstrebe 12 sowie der unteren dazu verlaufenden nicht sichtbaren Querstrebe umgrenzt werden. Bei dem Ziehgestell 17 sind dies die vertikalen Streben 19, 21 und die Querstreben 26 und 28. Diese Flachseiten, sowohl des Regalgestells 2 als auch des Ziehgestells 17, werden als Vorderseiten bezeichnet, während die dazu parallelen Flächen als Rückseiten anzusehen sind. Mit den beiden Vorderseiten stehen sich die Regalgestelle 2 einander gegenüber, so dass auch die Vorderseiten der Ziehgestelle 17 mit Abstand gegenüber angeordnet sind.

Zwischen den vertikalen Streben 18 und 22 jedes Ziehgestells 17 erstrecken sich horizontal und damit parallel zu den Querstreben 24 und 26 mehrere Querbalken 31, die mit dem vertikalen Streben 18 und 22 verstellbar verbunden sind. Verstellbar sind sie in dem Sinne, dass sie in beliebeigen Höhen an den beiden vertikalen Streben 18 und 19 befestigt werden können, wobei sie jedoch immer in horizontaler Ausrichtung angeordnet sind.

Jeder der Querbalken 31 trägt eine zugehörige Regalbodenplatte 32, wie dies am Besten die Ausschnittsdarstellung aus Fig. 3 erkennen läßt. Die Regalbodenplatte 32 ist ein rechteckiges Blechform- und -stanzteil mit einer Hinter- oder Rückkante 33 und einer dazu parallelen Vorderkante 34. Mit der Hinterkante 33 ist die Regalbodenplatte 32 an dem betreffenden Querbalken 31 angeschweißt. Von da ausgehen kragt sie frei in Richtung zu der Vorderseite des betreffenden Ziehregals 17 aus.

Jede der Regalbodenplatten 32 hat dieselbe räumliche Tiefe gemessen senkrecht zu der Vorderseite des betreffenden Ziehregals 17 und ist so gestaltet, dass sie eine Vielzahl von parallel nebeneinander verlaufenden Rinnen 35 mit V-förmiger Gestalt und 90° Öffnungswinkel bildet. Die V-förmigen Rinnen 35 laufen von der Hinterkante 33 zu der Vorderkante 34. Sie sind sämtlichst zueinander parallel und haben bei einer jeweiligen Regalbodenplatte 32 exakt dieselben Dimensionen. Sie können sich jedoch von Regalbodenplatte 32 zur nächsten Regalbodenplatte 32 in den Abmessungen ändern, wie dies in Fig. 1 im Bereich der oberen dort erkennbaren Regalbodenplatten zu sehen ist.

Jede der V-förmigen Rinnen 35 wird von zwei ebenen Flächen 36 und 37 begrenzt, die im Bereich eines unteren Scheitels 38 einstückig in einander übergehen und im Bereich von oberen Scheiteln 39 in die Wände 36 und 37 der jeweils seitlich benachbarten Rinne 35. Die Scheitel 38 und 39 sind gerade und stehen auf dem betreffenden Querbalken 31 senkrecht.

Wie sich aus der weiter unten angeben Funktionsbeschreibung noch genauer ergeben wird, stellt jede Rinne 35 ein Regalfach dar und die Wände 36 und 37 einen Fachboden 41 des betreffenden Regalfachs.

Die einzelnen Regalfächer 35 gehen in horizontaler Richtung ohne seitliche Trennwände ineinander über. In vertikaler Richtung sind sie durch die jeweils nächste Regalbodenplatte 32 von einander getrennt.

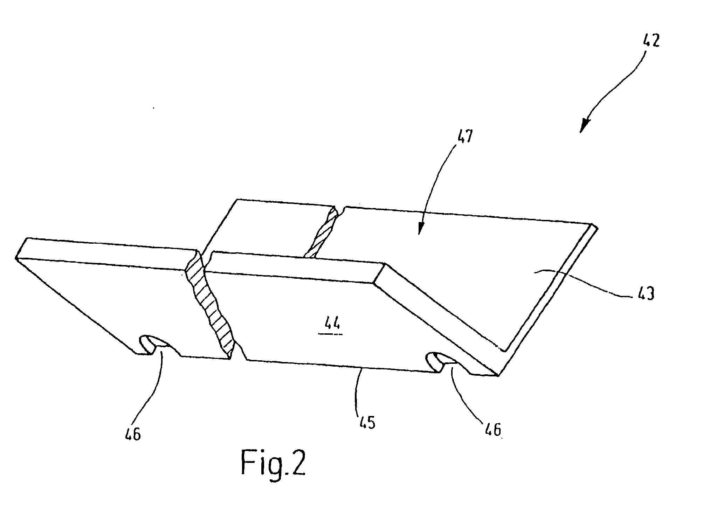

In jedem Regalfach 35 liegt ein Produktträger 42, der in Fig. 2 vergrößert, perspektivisch und in verkürzter Form wiedergegeben ist. Der Produktträger 42 ist ein Kunststoffformteil aus zwei ebnen geraden Wänden 43, 44, die sich über die Länge des Produktträgers 42 erstrecken und konstante Dicke haben. Die beiden Wände 43 und 44 schließen miteinander einen Winkel von 90° ein und sind längs einer Kante 45 einstückig mit einander verbunden. Die Länge der Produktträger 42 ist etwas größer bemessen, als es die Tiefe der Regalbodenplatte 32 gemessen zwischen der Hinterkante 33 und der Vorderkante 34 entspricht.

Die Wand 44 hat eine größere Dicke als die Wand 43 und ermöglicht die Ausbildung von zwei Ausnehmungen 46, die sich in der Nähe der unmittelbar benachbarten Stirnkante des Produktträgers 42 befinden. Die Lage der Ausnehmung 46 und die Länge des Produktträgers 42 ist derart bemessen, dass, wenn der Produktträger 42 an dem Querbalken 31 anstößt, er mit der einen Ausnehmung 46 über die frei auskragende Vorderkante 34 der Regalbodenplatte 32 übersteht, d.h. aus dem betreffenden Regalfach 35 herausragt.

Die Höhe der Wände 43 und 44 der Produktträger 42 ist so bemessen, dass, wenn sie in dem konstruktiv zugehörigen Regalfach 35 liegen, gegenüber den beiden seitliche benachbarten oberen Kämmen 39 geringfügig zurückspringen.

Wie ohne weiteres einleuchtet, sind die Produktträger 42 in den Regalfächern 35 in deren Längsrichtung zwangsläufig geführt und können auch seitlich nicht kippen. Die Führung ergibt sich auf Grund der Geometrie des Fachbodens 41 und der Geometrie des Produktträgers 42. Die im Winkel von 90° zu einander verlaufenden Wände 36 und 37, die den Fachboden 41 darstellen, bilden gleichzeitig die Führungsmittel für den Produktträger 42, dessen Unterseite, gebildet durch die nach unten weisenden Flächen der Wände 43 und 44, an diese Geometrie angepasst ist.

Die Unterseiten der Wände 43 und 44 stellen somit die zu den Führungsmitteln der Regalfächer 35 komplementären Führungsmittel dar. Da ferner die Wände 43 und 44 planparallele Platten sind, bei der jede für sich mit Ausnahme der Ausnehmung 46 an jeder Stelle die selbe Stärke aufweist, bildet der Produktträger 42 an seiner Oberseite eine ebenfalls V-förmige Rinne 47, die im Gebrauch die einzulagernden Produkte 48 beispielsweise Medikamentenpackungen aufnehmen. In Fig. 3 ist einer der Produktträger 42 veranschaulicht, wie er zwei Produkte 48a und 48b trägt.

Da Medikamentenverpackungen meistens quaderförmige Gestalt haben, können sie wie gezeigt schräg liegend in den Produktträger 42 aufbewahrt werden, wobei sie mit einer Seite auf der Oberseite einer der beiden Wände 43 und 44 aufliegen. Beim Einlagern der Produkte 48 wird darauf geachtet, dass sämtliche Produkte 48 in derselben Weise gekippt in sämtlichen Produktträgern 42 liegen. Dadurch wird verhindert, dass Produkte 48, die nach oben über den benachbarten oberen Scheitel 39 überstehen, mit anderen Produkten 48 in einem benachbarten Regalfach 35 kollidieren, die ebenfalls über den oberen Scheitel 39 überstehen.

Wegen der V-förmigen Oberseite des Produktträgers 42 können die einmal in dieser Weise eingelagerten Produkte 48 ihre Lage im Produktträger 42 nicht verändern. Darüber hinaus sind sie mit ihren Längsrichtungen parallel zu dem Regalfach 35 ausgerichtet, weil sie durch die V-förmige Rinne 47 des Produktträgers 42 so fest gehalten sind, dass die in der Rinne 47 liegende Kante in der Rinne 47 fixiert wird.

Es bedarf keiner besonderen Darstellung, um zu erkennen, dass in den V-förmigen Rinnen 47 der Produktträger 42 auch unverpackte zylindrische Gegenstände wie Fläschchen und Ampullen aufgenommen werden können, ohne Gefahr, dass sie ihre Orientierung ändern oder von dem Produktträger 42 herunter rollen können.

Bei der Verwendung des gezeigten Regallagers 1 wird darauf geachtet, dass die Produkte 48 höchstens um 1/3 über die von der Kante 45 abliegenden Kante der betreffenden Wand 43 oder 44 nach oben überstehen, wenn sie wie in Fig. 3 gezeigt in dem Produktträger 42 liegen.

Zum Handhaben der Produktträger 42 und der Produkte 48 ist das Regalbediengerät 4 vorgesehen. Das Regalbediengerät 4 verläuft horizontal auf einer Traverse 49, die in vertikaler Richtung zwischen den beiden Pfeilern 3a und 3b verschieblich geführt ist. Beispielsweise mit Hilfe von Zahnriemen 51 und nicht weiter gezeigten Antriebsmotoren läßt sich die Traverse 49 vertikal verstellen, während das Regalbediengerät 4 auf der Traverse 49 durch ebenfalls nicht dargestellt Antriebsysteme horizontal verfahrbar ist. Derartige Antriebssysteme sind bekannt und brauchen nicht im einzelnen dargestellt zu werden, da sie für das Verständnis der Erfindung nicht wesentlich sind.

Aufgrund dieser Form der Lagerung des Regalbediengerätes 4 kann es bezüglich zweier zueinander rechtwinkeliger Koordinaten verstellt werden und es läuft vor den frei auskragenden Vorderkanten 34 der Regalbodenplatten 32 der beiden Ziehgestelle 17a und 17b in einer vertikalen Ebene.

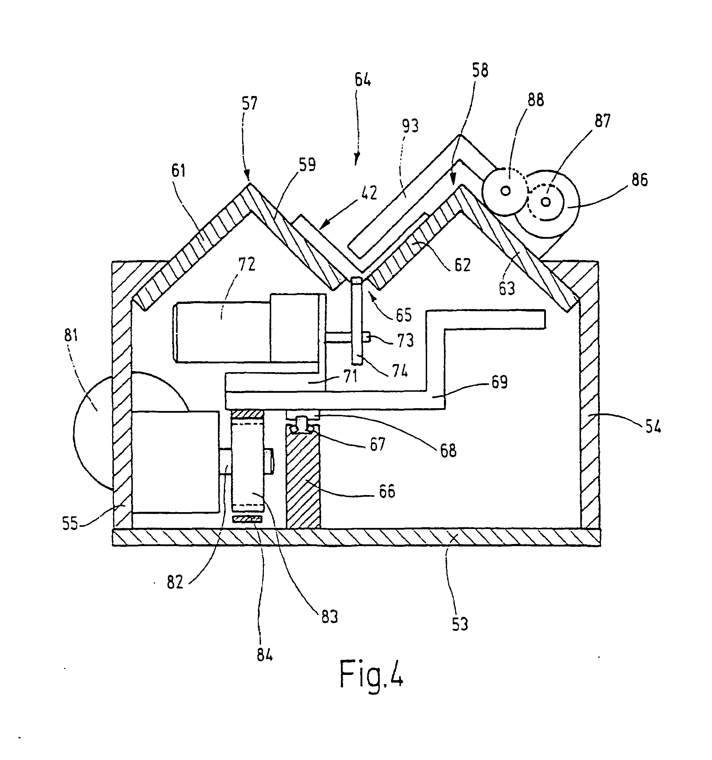

Gemäß den Fig. 3 und 4 gehört zu dem Regalbediengerät 4 ein im wesentlichen rohrförmiges Gehäuse 52 mit einem Boden 53, zwei Seitenwänden 54 und 55 sowie einer Oberseite 56. Die Seitenwände 54 und 55 verlaufen parallel zu einander und rechtwinkelig zu dem Boden 53. Sowohl der Boden 53 als auch die beiden Seitenwände 53 und 54 sind im wesentlichen glatt, während die Oberseite 56 strukturiert ist. Zu den beiden Enden hin ist das rohrförmige Gehäuse 52 offen, wobei jedes in Längsrichtung des Regalbediengerätes 4 liegende Ende des Regalbediengerätes 4 der Vorderseite eines benachbarten Ziehgestells 17a oder 17b gegenüber steht.

Die Oberseite des Regalbediengerätes 4 besteht, wie am Besten Fig. 4 erkennen läßt, aus zwei in Längsrichtung verlaufenden Winkelschienen 57 und 58. Die Winkelschiene 57 setzt sich aus zwei im rechten Winkel zu einander ausgerichteten Schenkeln 59 und 61 zusammen und die Winkelschiene 58 aus zwei im rechten Winkel zu einander verlaufenden Schenkeln 62 und 63. Die Schenkel 61 und 63 sind unter 45° an der Innenseite der beiden Seitenwände 54 und 55 befestigt. Zwischen den Schenkeln 59 und 62 entsteht wiederum eine V-förmige Rinne 64, die von zwei glatten Seitenwänden nämlich den Schenkeln 59 und 62 begrenzt ist. Die Rinne 64 erstreckt sich gerade zwischen den beiden Enden des Regalbediengerätes und ist an jeder Stirnseite offen.

Die Schenkel 59 und 62 stoßen an ihren freien Kanten nicht an einander. Die Rinne 64 ist an ihrer tiefesten Stelle mit einem durchgehenden Spalt 65 versehen, durch den die Rinne 64 nach unten offen ist. In diese Rinne 64 kann wie Fig. 4 zeigt ein Produktträger 42 eingelegt werden und zwar so, dass dessen untere Kante 45 mit den Ausnehmungen 46 durch den Spalt 45 hindurch zugänglich ist.

In dem Gehäuse 42 verläuft eine Führungsschiene 66, die auf der Oberseite des Bodens 53 befestigt ist. Die Führungsschiene 66, die über die Länge des Gehäuses 42 durch läuft, trägt auf ihrer Oberseite eine hinterschnittene Führungsnut 67, in der mit nicht weiter erkennbaren Wälzkörpern ein Schlitten 68 geführt ist. Der Schlitten 68 trägt auf seiner Oberseite eine Konsole 69. Die Konsole 69 kragt auf beiden Seiten über den Schlitten 68 über, wobei bezogen auf Fig. 4 auf der linken Seite ein Montagewinkel 71 auf der Konsole 69 befestigt ist. Der Montagewinkel 71 dient der Halterung eines Getriebemotors 72, dessen Getriebeausgangswelle 73 unterhalb des Spaltes 65 verläuft und rechtwinkelig zu dessen Längserstreckung ausgerichtet ist.

Die Konsole 69 kragt ferner nach rechts über den Schlitten 68 über, um ein Kompensationsgewicht für den Getriebemotor 72 zu haltern bzw. zu bilden. Das Ausgleichsgewicht ist nicht gezeigt.

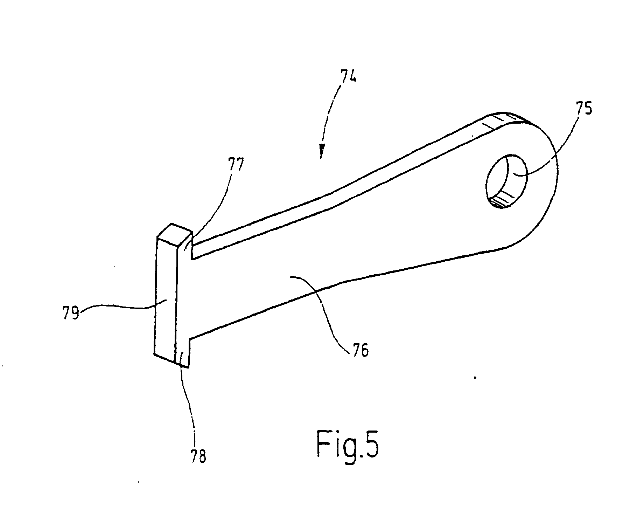

Der Getriebemotor 72 ist ein Servomotor, dessen Ausgangswelle 73 in definierte Winkellagen gesteuert werden kann. Auf der Ausgangswelle 73 sitzt drehfest ein Betätigungsfinger wie ihn Fig. 5 in vergrößerter Darstellung zeigt. Der Betätigungsfinger 74 ist an einem Ende mit einer Aufnahmebohrung 75 zum Durchstecken der Ausgangswelle 73 versehen. Die Mittel zum drehfesten Sichern auf der Ausgangswelle 73 sind nicht gezeigt, da sie für das Verständnis der Erfindung unwesentlich sind.

Ausgehend von der Aufnahmebohrung 75 bildet der Betätigungsfinger 74 einen Arm 76, an dessen freien Ende zwei Haken 77 und 78 ausgebildet sind. Die beiden Haken 77 und 78 erstrecken sich zu entgegengesetzten Richtungen gemessen in einer Ebene, auf der die Achse der Bohrung 75 senkrecht steht. Zwischen den beiden Haken 77 und 78 verläuft eine plane Stirnfläche 79. Mit Hilfe der Haken 77 und 78 wird, wie später noch im einzelnen dargelegt wird, der Produktträger 42 bewegt bzw. in der Rinne 64 abgelegte Produkte 48.

Um die Konsole 69 längs der Führungsschiene 66 in definierte Stellungen zu bewegen, ist ein weiter Getriebemotor 81 vorhanden, der ebenfalls als Servomotor ausgeführt ist. Seine Ausgangswelle 82 liegt parallel zu der Ausgangswelle 73 und damit rechtwinkelig zu der Längserstreckung der Führungsschiene 66.

Die Ausgangswelle 82 trägt drehfest eine Zahnriemenscheibe 83, die den Antrieb eines endlosen Zahnriemens 84 dient, dessen Arbeitstrum zwischen der Zahnriemenscheibe 83 und der Unterseite der Konsole 69 zu erkennen ist. Der endlose Zahnriemen 84 läuft über zwei Umlenkscheiben 85 in Gestalt von Losrollen um, die in der Nähe der Enden der Führungsschiene 66 an dieser frei drehbar gelagert sind. Spannmittel zum Spannen des Zahnriemens 84 sind ebenfalls vorhanden, in der Zeichnung jedoch nicht dargestellt bzw. in Fig. 3 nicht erkennbar, weil durch die Seitenwand 45 abgedeckt.

Ein einer Stelle ist der Zahnriemen 84 mit der Unterseite der Konsole 69 fest verbunden. Wenn der Servomotor 81 in Gang gesetzt wird, wird über die Zahnriemenscheibe 83 und den Zahnriemen 84 die Konsole 69 und damit auch der Betätigungsfinger 74 in Längsrichtung des Spaltes 65 bewegt.

Zum Normieren der beiden Servomotoren 72 und 81 sind bekannter Weise Referenzeinrichtungen vorgesehen, die mit der zentralen Steuerung in bekannter Weise verknüpft sind. Auf diese Weise kennt die zentrale Steuerung sowohl die exakte Winkelstellung des Betätigungsfingers 74 als auch die Stellung der Ausgangswelle 73 bezogen auf die Längserstreckung des Spaltes 65.

An der Außenseite des Schenkels 63 sitzt ein weiterer Getriebemotor 86, der über Stirnzahnräder 87 und 88 eine Welle 89 antreibt, die auf der Außenseite des Schenkels 63 in Lagerböcken 91 drehbar gelagert ist. Mit der Welle 89 sind drehfest zwei L-förmige Hebel 92a und 92b verbunden, deren Schenkel 93a bzw. 93b als Haltefinger wirken. Der Haltefinger 93 kann, wie in Fig. 3 gezeigt, nach oben gerichtet oder gemäß Fig. 4 in die von dem Produktträger 42 gebildete Rinne 67 eingeschwenkt werden, wobei er in dieser Stellung genügend Spiel gegenüber den beiden Wänden 43 und 44 einhält.

Die Haltefinger 93 befinden sich unmittelbar neben den Enden der Rinne 64, um die Rinne 64 wahlweise an ihren beiden Enden absperren zu können. Der Abstand zwischen den Haltefingern 19 ist etwas größer als die Länge des Produktträgers 42.

Da auch der Betätigungsfinger 74 mit Hilfe der Führungsschiene 66 zu beiden Enden des Spaltes hin bewegt werden kann, ist aus der Sicht der Funktion eine symmetrische Betriebsweise möglich, d.h. das Regalbediengerät 4 kann in derselben Weise die Regalfächer 35 des Ziehgestells 17a bedienen wie die Regalfächer 35 in dem Ziehgestell 17b und zwar in jeder Höhe.

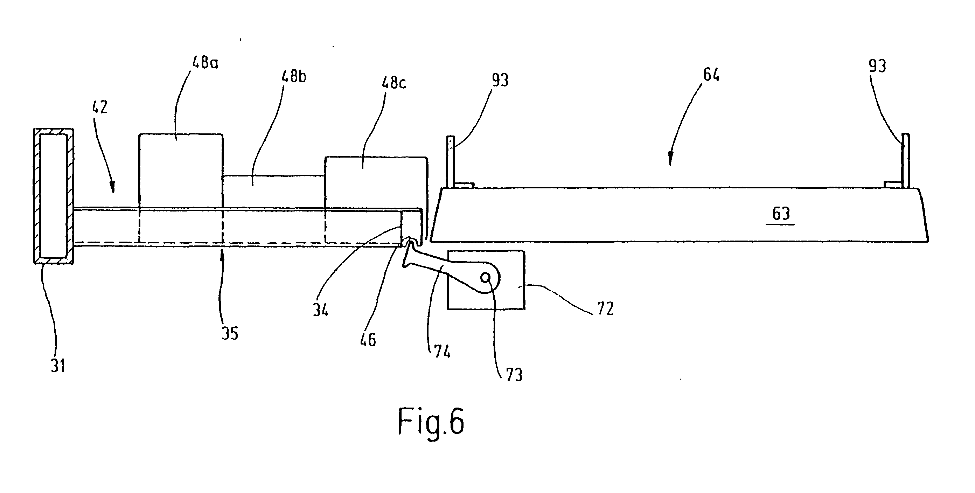

Die genaue Betriebsweise des neuen Regallagers wird nachstehend an Hand der Fig. 6 bis 11 erläutert. In den Fig. 6 bis 11 sind lediglich diejenigen Bauteile schematisch veranschaulicht, die für das Verständnis der Arbeitsweise von Bedeutung sind.

So zeigen die Fig. 6 bis 11 exemplarisch eine der Rinnen bzw. Regalfächer 35, das an dem Querbalken 31 befestigt ist. Von der Rinne 35 ist beispielsweise die Wand 37 zu erkennen. In der Rinne 35 bzw. dem Regalfach 35 liegt ein Produktträger 42, wobei in Fig. 6 die Unter- oder Rückseite der Wand 44 mit der Ausnehmung 64 zu erkennen ist, die über die Vorderkante 34 auskragt. In Fig. 6 ist rechts neben dem Regalfach 35 die aufgeschnittene Rinne 64 des Regalbediengerätes zu erkennen und zwar in einem Blick auf die Ober- oder Außenseite des Schenkels 63, dessen untere Kante ist eine Begrenzungskante des Spaltes 65 ist. Unterhalb des Schenkels 63 ist spiegelbildlich die Ausgangswelle 73 des umgeklappt gezeichneten Getriebemotors 72 zu erkennen mit dem drehfest darauf angeordneten Betätigungsfinger 74. Die Einrichtungen zum Längsverschieben des Getriebemotors 72 und damit des Betätigungsfingers 74 sowie die Führungseinrichtungen hierzu sind aus Gründen der Übersichtlichkeit weggelassen.

Schließlich ist oberhalb des Schenkels 63 jeweils an den Enden ein Haltefinger 93 zu sehen.

In dem gezeigten Regallager sind die Produkte 48 in chaotischer Weise abgelegt. Beim Einlagern erhält die zentrale Steuerung Informationen über die Kantelängen der Produkte 48, den Produktnamen bzw. die Artikelbezeichnung, die Adresse bzw. Lage des jeweiligen Regalfaches und die Position des Produktes auf dem Produktträger 42 und die Schräglage.

Als Ausgangslage für die Erläuterung der Funktion sei angenommen, dass der Produktträger 42 in seinem Regalfach 35 liegt, wobei er bis gegen den Querbalken 31 geschoben ist. Die eine Ausnehmung 46, die von dem Querbalken 31 entfernt liegt, ist frei zugänglich.

Auf dem Produktträger 42 liegen insgesamt drei Produkte 48a, 48b, und 84c, die sich in den Abmessungen der Verpackung unterscheiden. Alle Produkte 48 liegen in der gleich Weise schräg gekippt in dem Produktträger 42, wie es am Besten Fig. 3 erkennen läßt.

Wenn beispielsweise das Produkt 48c aus dem gezeigten Regalfach 35 entnommen werden soll, wird von der zentralen Steuerung das Regalbediengerät 4 vor das jeweilige Regalfach 35 bewegt. Dazu wird die Traverse 49 mit dem Regalbediengerät 4 auf die entsprechende Höhe gebracht und sodann wird das Regalbediengerät 4 längs der Traverse 49 auf das betreffende Regalfach 35 ausgerichtet. Ausgerichtet bedeutet in diesem Falle, dass die Rinne 64 des Regalbediengerätes 4 mit der das Regalfach 35 definierenden Rinne hinsichtlich der horizontal Richtung fluchtet, in vertikaler Richtung jedoch ein klein wenig tiefer steht. In dieser Stellung gibt es einen geringen Spalt zwischen der frei zugänglichen Stirnkante des Produktträgers 42 und dem gegenüberstehenden Ende der Rinne 64.

Die zentrale Steuerung, die zuvor in bekannter Weise die Position des Betätigungsfingers 74 normiert hat, und zwar hinsichtlich seiner Drehwinkelstellung als auch hinsichtlich seiner Stellung in Längsrichtung bezogen auf den Spalt 65, veranlasst nun, dass der Getriebemotor 81 den Getriebemotor 82 mit dem Betätigungsfinger 74 in Richtung auf den Produktträger 42 bewegt. Die Bewegung wird angehalten, sobald beispielsweise der in dieser Zeichnung nach oben zeigende Haken 77 sich unterhalb der Ausnehmung 46 befindet. Um den Betätigungsfinger 74 in diese Stellung zu bringen, wurde er zuvor in eine horizontale Lage geschwenkt in der keiner der Haken 77 und 78 in den Spalt 56 eintaucht. Damit kann der Betätigungsfinger 74 ungehindert bis unter den Produktträger 42 gebracht werden.

Sobald er sich in der richtigen Stellung befindet, veranlasst die Steuerung, dass der Betätigungsfinger 74 ausgehend von der Horizontallage in eine erste nach oben geschwenkte Stellung gedreht wird, in der der jeweils nach oben zeigend Haken 77 oder 78 in die Ausnehmung 46 eingreift ohne den Produktträger 42 anzuheben. Ersichtlicherweise wirken die Haken 77 und 78 zusammen mit den Ausnehmungen 46 als Koppelmittel, um nunmehr das Regalbediengerät 4 mit dem betreffenden Produktträger 42 zu koppeln. Es ist damit die Stellung nach Fig. 6 erreicht.

Falls noch nicht geschehen, werden die Haltefinger 93 nach oben aus der Rinne 64 heraus geklappt.

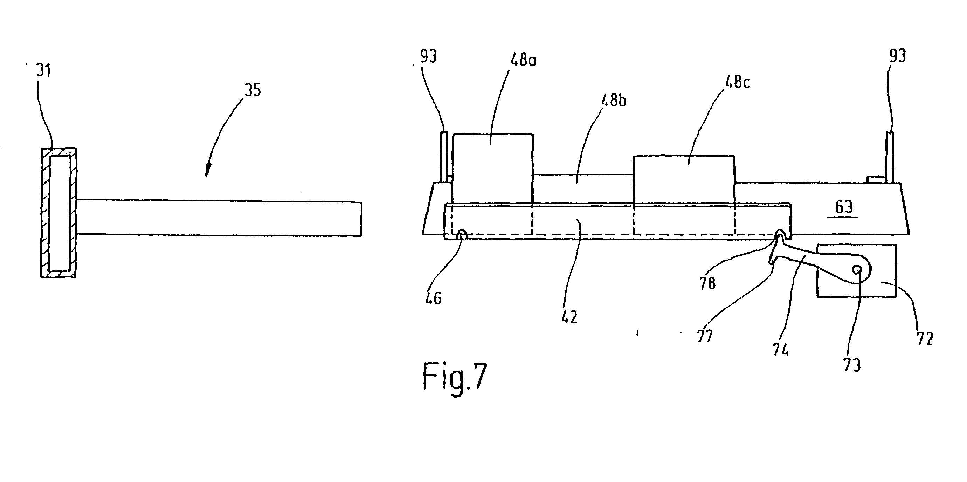

Die Steuerung veranlasst nun den Getriebemotor 81 sich wiederum in Gang zu setzen, und zwar in der entgegengesetzten Richtung, wodurch der Betätigungsfinger 74 den mit ihm verhakten Produktträger 42 vollständig auf die Rinne 74 zieht, so weit, bis die Hinterkante des Produktträgers 42, die in Fig. 6 an dem Querbalken 41 angestoßen ist, hinter den Lichtraum des linken Haltefingers 93 zurückgezogen ist. Diese Endelage ist in Fig. 7 zu sehen.

Nunmehr veranlasst die zentrale Steuerung, den Haltefinger 93 mit Hilfe des Getriebemotors 86 in die Rinne 64 zu schwenken.

Sobald die Haltefinger 93 herunter geschwenkt sind, setzt die zentrale Steuerung den Servomotor 81 erneut in Gang, in Richtung auf das Regalfach 35 aus dem soeben der Produktträger herausgezogen wurde. Vorher wurde allerdings die Höhe der Traverse 49 geringfügig verändert, damit beim Zurückschieben des Produktträgers 42 in das Regalfach 35 dessen rückwärtige Kante nicht mit der Vorderkante 35 kollidiert. Wenn jetzt der Produktträger 42 mit Hilfe des Servomotors 81 zurück in sein Regalfach 35 geschoben wird, können die auf dem Produktträger 42 liegenden Produkte 48a, 48b und 48c der Bewegung nicht folgen, weil das Produkt 48a an dem Haltefinger 93 anstößt. Durch die Längsbewegung des Betätigungsfingers 74 in Richtung auf das Regalfach 35 werden die Produkte 48 auf dem Produktträger 42 in Richtung auf den Betätigungsfinger 74 verschoben. Während der Bewegung wird als erstes das Produkt 48c, das dem Betätigungsfinger 74 am nächsten benachbart ist, von dem Produktträger 42 herunter in die Rinne 64 des Regalbediengerätes 4 fallen.

Da beim Einlagern der Produkte die zentrale Steuerung zu jedem Produkt vermerkt hat, welche Kantenabmessungen der Gegenstand hat, in welchem Regalfach 35 er sich befindet und auf welcher Stelle auf dem Produktträger 42, weiß die zentrale Steuerung, wann der Produktträger 42 weit genug verschoben ist, damit unter Hinzurechnung einer gewissen Toleranzstrecke das Produkt 48c mit Sicherheit vom dem Produktträger 42 herunter geschoben ist und in der Rinne 64 liegt.

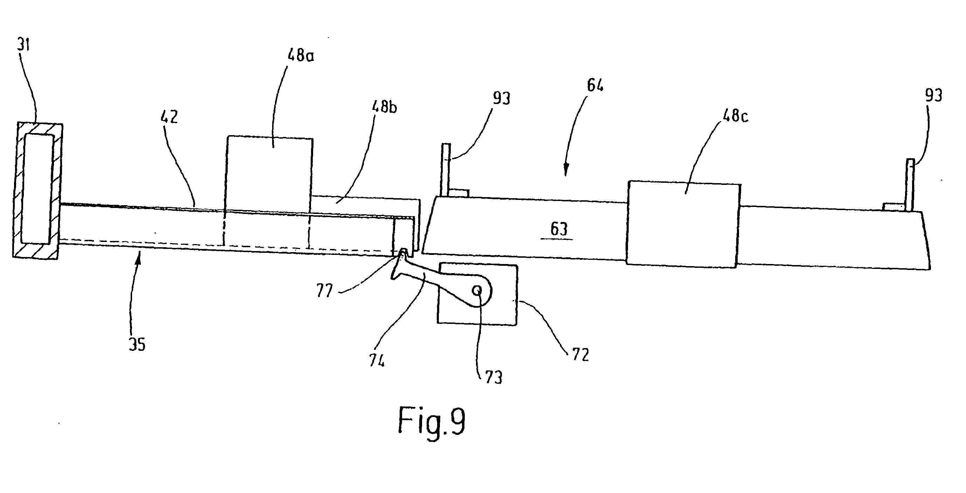

Es wird jetzt kurzzeitig der Vorschub für den Betätigungsfinger 74 unterbrochen, um in der kurzen Pause den Haltefinger 93 nach oben zu schwenken. Das Lichtraumprofil des Produktes 48a ist jetzt wieder frei und es kann der Produktträger 42 zusammen mit den jetzt noch verbliebenen beiden Produkten 48a und 48b zurück in sein Regalfach 35 geschoben werden. Die Endstellung dieser Bewegung ist in Fig. 9 gezeigt. In dem Regalfach 35 liegt jetzt wieder der zugehörige Produktträger 42, der jetzt jedoch nur noch die beiden Produkte 48a und 48b trägt, während das Produkt 48c auf dem Regalbediengerät 4 liegen geblieben ist.

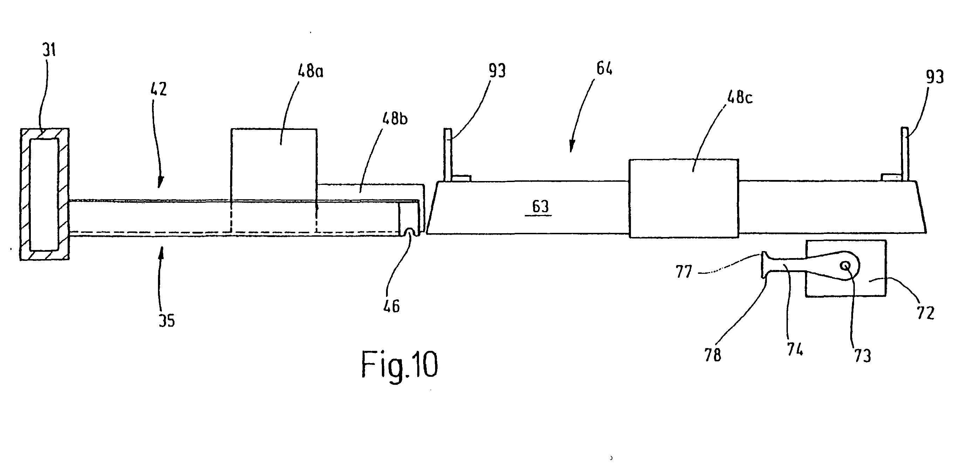

Die zentrale Steuerung veranlasst den Servomotor 72 den Betätigungsfinger 74 nach unten zu schwenken, damit er außer Eingriff mit dem Produktträger 42 kommt. Sodann wird mit Hilfe des Servomotors 81 der Betätigungsfinger 74 zusammen mit seinem Servomotor 72 in die rechte Endlage gemäß Fig. 10 gebracht, wobei er unter dem Regalbediengerät 4 liegenden Produkt 48c vorbei läuft. Angekommen in dieser Stellung oder während der Betätigungsfinger 74 in diese Stellung läuft, wird das Regalbediengerät 4 von der Steuerung zu einer Ausgaberutsche 94 gebracht, deren Seitenwand in Fig. 1 zu sehen sind. Diese Ausgaberutsche 94 schließt sich an dem Ende einer der Regalbodenplatten 32 an und stellt dort eine nach außen führende Verlängerung der letzten nach unten führenden Seitenwand 37 dar.

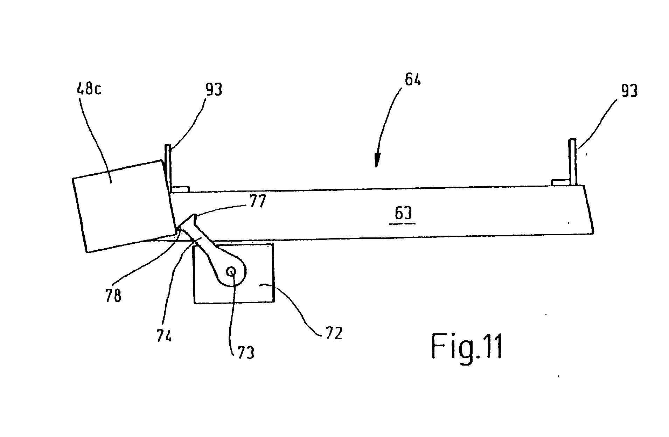

Wenn das Regalbediengerät 4 diesen Koordinatenpunkt erreicht, wird hinter dem Produkt 48c der Betätigungsfinger 4 mit Hilfe des Servomotors 42 nach oben geschwenkt und zwar weiter als zum Koppeln mit dem mit dem Produktträger 42 erforderlich ist. Die Schwenkstellung zum Koppeln der Ausnehmung 46 des Produktträgers 42 nicht hoch genug und der Betätigungsfinger 74 würde wirkungslos unter dem Produkt 48c vorbeilaufen. Da jedoch beabsichtigt ist das Produkt 48c vom dem Regalbediengerät 4 herunter zu schaffen, wird der Betätigungsfinger 74 deutlich in das Lichtraumprofil der Rinne 64 hineinragen aufgerichtet, um mit dem Produkt 48c zusammen treffen zu können. Durch den weiteren Vorschub nach links wird wie Fig. 11 zeigt das Produkt 48c aus der Rinne 64 heraus gestoßen, um über die Ausgaberutsche 94 auf ein nicht weiter gezeigtes weiteres Transportsystem übergeben zu werden.

Die Funktionsweise der gesamten Anordnung wurde in den Fig. 6 bis 11 so veranschaulicht, als würde ein Produktträger 42 aus dem linken Ziehgestell 17a gehandhabt. In sinngemäß der gleichen Weise nur spiegelbildlich kann ein Produktträger 42 aus dem rechten Ziehgestell 17b bewegt und bearbeitet werden. Dazu wird der Betätigungsfinger 74 in die spiegelbildliche Lage zu den Stellungen gebracht wie sie in den Fig. 6 bis 11 gezeigt sind. Da jeder Produktträger 42 in der Nähe beider Enden mit den Ausnehmungen 46 versehen ist, ist ohne weiteres die Kopplung mit den Produktträgern 42 in dem rechten Ziehgestell 17b zu bewerkstelligen, ohne den Betätigungsfinger 74 in Richtung parallel zu der Ausgangswelle 73 versetzen zu müssen. Er befindet sich in dem Spalt 65 immer in der gleichen Lage wie dies Fig. 4 recht gut erkennen läßt.

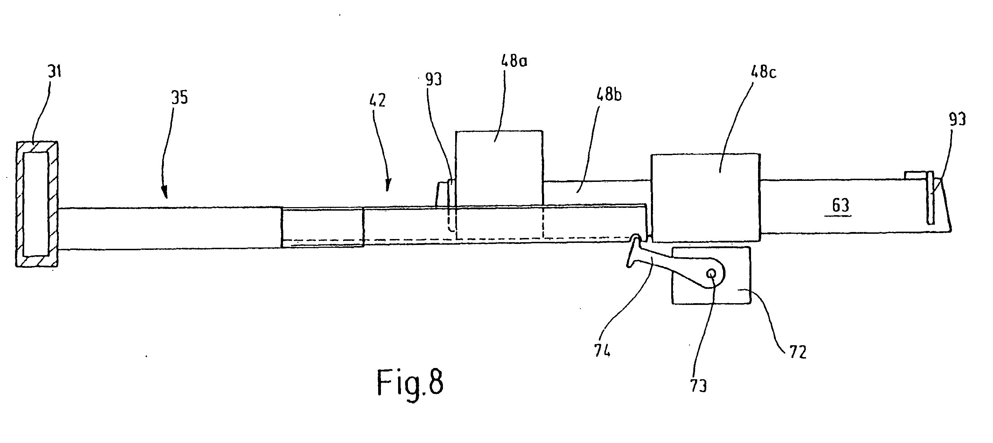

Vorstehend wurde erläutert, wie das Produkt 48c zu der Ausgaberutsche 94 geschafft werden kann. Wenn an Stelle des Produktes 48c das Produkt 48a benötig wird, bleibt abweichend von der Darstellung nach Fig. 8 der Haltefinger 93 abgesenkt, solange bis auch das Produkt 48a lose in der Rinne 64 des Regalbediengerätes liegt. Sodann kehrt der Betätigungsfinger 74 in die Stellung nach Fig. 10 zurück, das Regalbediengerät 4 fährt vor die Ausgaberutsche 94 und sobald dieser Ort erreicht ist, wird, ähnlich wie in Fig. 11 dargestellt, mit Hilfe des Betätigungsfingers 74 die hintereinander liegende Gruppe aus den drei Produkten 48a, 48b und 48c solange nach vorne geschoben, bis das Produkt 48a von der Rinne 64 des Regalbediengerätes 4 auf die Ausgaberutsche 94 herunterstürzt.

Nachdem dies eingetreten ist, wird der Vorschub des Betätigungsfingers 74 angehalten. Aufgrund der Abmessungen der Produkte 48a, 48b und 48c und ihrer Lage auf der Rinne 64 zufolge der Arretierung durch die Haltefinger 93, weiß die Steuerung, in welcher Stellung des Betätigungsfingers 74 das Produkt 48a die Rinne 64 verlassen hat.

Das Regalbediengerät 4 kehrt jetzt zu dem Regalfach 35 zurück, in dem der Produktträger 42 liegt, von dem die Produkte zuvor 48a, 48b und 48c entnommen wurden. Das Regalbediengerät wird in eine Stellung gebracht, in der die Rinne 64 etwas höher steht als die von dem Produktträger 42 definierte Rinne 47 und sodann wird die zunächst angehaltene Vorschubbewegung des Betätigungsfingers 74 fortgesetzt. Die noch auf dem Bediengerät verblieben Produkte 48b und 48c werden auf den freien Produktträger 42 zurückgeschoben bis sich das Produkt 48c wieder in der Stellung befindet die Fig. 6 zeigt.

In sinngemäß ähnlicher Weise kann mit dem mittleren Produkt 48b verfahren werden, wenn es ausgelagert werden soll. In diesem Fall würde der Produktträger 42, nachdem er in das zugehörige Regalfach 35 zurückgeschafft wurde, zunächst nur noch das Produkt 48a tragen, und es würde nach der Ausgabe des Produktes 48b das noch in der Rinne 64 verblieben Produkt 48c auf den Produktträger 42 zurückgebracht werden.

Ein Regallager 1 enthält Regalfächer 35, die als Boden 41 eine V-förmige Rinne aufweisen. In jeder Rinne 34 liegt ein Produktträger 42, der ebenfalls die Gestalt einer V-förmigen Rinne hat. Das Regalbediengerät 4, mit dem die Produkte 48 ein- und ausgelagert werden, trägt seinerseits auf der Oberseite eine V-förmige Rinne 64, auf der entweder der Produktträger 42 mit den Produkten 48 oder ein auszugebendes Produkt 48 alleine abgelegt werden können. Mit Hilfe eines Betätigungsfingers 74, der durch einen Spalt 65 in der Rinne 64 des Bediengerätes 4 nach oben geschwenkt werden kann, läßt sich der Produktträger 42 zwischen dem Regalfach 35 und dem Regalbediengerät 4 hin und her verschieben bzw. die ohne Produktträger 42 lose auf dem Regalbediengerät 4 liegende Verpackung 48.

## Patentansprüche

1. Regallager (1)
mit einer Anzahl von Regalfächern (35), von denen jedes einen Fachboden (41) mit einer Oberseite aufweist, wobei zumindest ein Teil der Regalfächer (35) Zugänge aufweisen, die in einer gemeinsamen glatten Fläche liegen,
mit einer Anzahl von Produktträgern (42), von denen je einer einem Regalfach (35) zugeordnet ist und jeder eine Auflagefläche (47) für zu lagernde Produkte (48) aufweist,
mit einem Regalbediengerät (4), das dazu eingerichtet ist vor jedes der Regalfächer (35) bewegt zu werden,
mit einem Betätigungsfinger (47), der an dem Regalbediengerät (4) längsverschieblich gelagert ist, derart dass er senkrecht zu der glatten Fläche bewegbar ist und
mit Koppelmitteln (46, 77, 78), um den Betätigungsfinger (74) wahlweise mit einem der Produktträgern (42) zu koppeln,
**dadurch gekennzeichnet,**
**dass** ein auf dem Regalbediengerät (4) vorgesehenes Auflager (64)vorhanden ist, das dazu eingerichtet ist, wahlweise Produktträger (42) oder Produkte (48) unmittelbar aufzunehmen,
**dass** der Betätigungsfinger (47) bezüglich des Regalbediengeräts (4) in wenigstens drei unterschiedliche Positionen schwenkbar ist, wobei er sich in der ersten Stellung in einer unwirksamen Stellung unter (64) dem Auflager und in den beiden anderen Stellungen im Wirkraum des Auflagers (64) befindet und
**dass** wenigstens ein beweglich gelagerter Haltefinger (93) vorgesehen ist, der in wenigstens zwei Stellungen zu bewegen ist, wobei er sich in der einen Stellung in dem Bewegungsweg wenigstens eines auf dem Produktträger (42) befindlichen Produktes (48) befindet, wenn der Produktträger (42) von dem Regalbediengerät (4) zurück in ein jeweiliges Regalfach (35) bewegt wird.

2. Regallager nach Anspruch 1, **dadurch gekennzeichnet, dass** alle Produktträger (42) dieselbe Tiefe aufweisen, gemessen in Richtung senkrecht zu einer Ebene, in der sich das Regalbediengerät (4) beim Positionieren von einem Regalfach (35) auf ein anderes Regalfach (35) bewegt.

3. Regallager nach Anspruch 1, **dadurch gekennzeichnet, dass** jedes Regalfach (35) mit regalfesten Führungsmitteln (36,37) für einen jeweiligen Produktträger (42) ausgestattet ist, dass die Führungsmittel (36,37) aller Regalfächer (35) untereinander gleich sind, dass die Produktträger (42) mit komplementären Führungsmitteln (43,44) versehen sind, und dass das Auflager (64) mit Führungsmitteln (59,62) versehen ist, die zum Zusammenwirken mit den Führungsmitteln (44,45) der Produktträger (42) eingerichtet sind.

4. Regallager nach Anspruch 1, **dadurch gekennzeichnet, dass** alle Regalfächer (35) dieselbe Tiefe aufweisen, gemessen in Richtung senkrecht zu der Fläche, in der sich das Regalbediengerät (4) beim Positionieren von einem Regalfach (35) auf ein anderes Regalfach (35) bewegt.

5. Regallager nach Anspruch 1, **dadurch gekennzeichnet, dass** das regalfestes Führungsmittel (36,37) durch die Geometrie des jeweiligen Fachbodens (41) gebildet ist.

6. Regallager nach Anspruch 1, **dadurch gekennzeichnet, dass** der Fachboden (41) in seiner Oberseite als Führungsmittel eine in Längsrichtung des Fachbodens (41) sich erstreckende und nach oben offene Führungsrinne (35) enthält.

7. Regallager nach Anspruch 1, **dadurch gekennzeichnet, dass** der Fachboden (41) zwei ebenen Flächen (36,37) aufweist, die zueinander V-förmig verlaufen und die über die Tiefe des jeweiligen Regalfachs (35) mit dieser relativen Zuordnung durchlaufen.

8. Regallager nach Anspruch 1, **dadurch gekennzeichnet, dass** der Fachboden (41) eines jeweiligen Regalfachs (35) lediglich von den beiden V-förmig zueinander verlaufenden Flächen (36,37) gebildet ist.

9. Regallager nach Anspruch 1, **dadurch gekennzeichnet, dass** die V-förmig zueinander verlaufenden Flächen (36, 37) einen Winkel von 90° miteinander einschließen.

10. Regallager nach Anspruch 1, **dadurch gekennzeichnet, dass** mehrere Regalfächer (35) in einem Gestell (17) angeordnet sind und dass das Gestell (17) in dem Regalgestell (2) beweglich gelagert ist.

11. Regallager nach Anspruch 1, **dadurch gekennzeichnet, dass** sich zwei Gestelle (17) mit Abstand gegenüber befinden und dass zwischen den Gestellen (17) das Regalbediengerät (4) vorgesehen ist.

12. Regallager nach Anspruch 1, **dadurch gekennzeichnet, dass** die Produktträger (42) derart gestaltet sind, dass sie mit ihrer Unterseite unmittelbar auf dem jeweiligen Fachboden (41) aufliegen.

13. Regallager nach Anspruch 1, **dadurch gekennzeichnet, dass** die Unterseite des Produktträgers (42) an die Oberseite des zugehörigen Fachbodens (41) angepasst ist.

14. Regallager nach Anspruch 1, **dadurch gekennzeichnet, dass** der Produktträger (42) an seiner Oberseite Positioniermittel (47) aufweist, um auf dem Produktträger (42) befindliche Produkte (48) auszurichten und/oder ausgerichtet zu halten.

15. Regallager nach Anspruch 1, **dadurch gekennzeichnet, dass** der Produktträger (42) in seiner Oberseite eine in Längsrichtung des Produktträgers (42) sich erstreckende und nach oben offene Aufnahmerinne (47) enthält.

16. Regallager nach Anspruch 1, **dadurch gekennzeichnet, dass** der Produktträger (42) zwei ebenen Flächen (43,-44) aufweist, die zueinander V-förmig verlaufen und die über die Länge des jeweiligen Produktträgers (42) mit dieser relativen Zuordnung durchlaufen.

17. Regallager nach Anspruch 1, **dadurch gekennzeichnet, dass** der Produktträger (42) eines jeweiligen Regalfachs (35) lediglich von den beiden V-förmig zueinander verlaufenden Flächen (43,44) gebildet ist.

18. Regallager nach Anspruch 1, **dadurch gekennzeichnet, dass** die V-förmig zueinander verlaufenden Flächen (43, 44) einen Winkel von 90° miteinander einschließen.

19. Regallager nach Anspruch 1, **dadurch gekennzeichnet, dass** die Länge des Produktträgers (42) größer ist als die Tiefe des zugehörigen Regalfachs (35).

20. Regallager nach Anspruch 1, **dadurch gekennzeichnet, dass** alle Produktträger (35) dieselbe Länge aufweisen, unabhängig von der Breite des jeweiligen Regalfachs (35).

21. Regallager nach Anspruch 1, **dadurch gekennzeichnet, dass** die Länge eines Produktträgers (42) größer ist als die Summe von wenigstens zwei, vorzugsweise drei, mittelgroßen Produkten (48), wobei die Abmessungen des mittelgroßen Produktes (48) aus dem Mittelwert dungen alle Produkte (48) berechnet ist.

22. Regallager nach Anspruch 1, **dadurch gekennzeichnet, dass** Produkte (48) mit gleichen Abmessungen lediglich einmal bei der Berechnung des Mittelwertes berücksichtigt werden.

23. Regallager nach Anspruch 1, **dadurch gekennzeichnet, dass** das Koppelmittel (46) an dem Produktträger (42) von einer Öffnung oder Ausnehmung an dessen Unterseite gebildet ist.

24. Regallager nach Anspruch 1, **dadurch gekennzeichnet, dass** das Auflager (64) in seiner Oberseite als Führungsmittel eine in Längsrichtung des Auflagers (64) sich erstreckende und nach oben offene Führungsrinne (64) enthält, wobei die Längsrichtung senkrecht auf der Fläche steht, längs derer das Regalbediengerät (4) zu verfahren ist.

25. Regallager nach Anspruch 1, **dadurch gekennzeichnet, dass** das Auflager (64) zwei ebenen Flächen (59,62) aufweist, die zueinander V-förmig verlaufen und die über die Tiefe des Auflagers (64) mit dieser relativen Zuordnung durchlaufen.

26. Regallager nach Anspruch 1, **dadurch gekennzeichnet, dass** das Auflager (64) lediglich von den beiden V-förmig zueinander verlaufenden Flächen (59,62) gebildet ist.

27. Regallager nach Anspruch 1, **dadurch gekennzeichnet, dass** die V-förmig zueinander verlaufenden Flächen (59, 62) einen Winkel von 90° miteinander einschließen.

28. Regallager nach Anspruch 1, **dadurch gekennzeichnet, dass** das Auflager (64) länger als ein Produktträger (42) ist.

29. Regallager nach Anspruch 1, **dadurch gekennzeichnet, dass** der Betätigungsfinger (74) in einem Spalt (65) des Auflagers (64) verschwenkbar ist.

30. Regallager nach Anspruch 1, **dadurch gekennzeichnet, dass** der Betätigungsfinger (74) an jedem der in Längsrichtung liegenden Enden des Auflagers (64) in die drei Stellungen zu bringen ist.

31. Regallager nach Anspruch 1, **dadurch gekennzeichnet, dass** der Betätigungsfinger (74) derart an dem Regalbediengerät (4) gelagert ist, dass er in wenigstens einer Stellung, in der er über das Auflager (64) nach oben übersteht, bis in das Regalfach (35) vorbewegbar ist.

32. Regallager nach Anspruch 1, **dadurch gekennzeichnet, dass** das Koppelmittel des Betätigungsfingers (74) von wenigsten einem Haken (77,78) gebildet ist.

33. Regallager nach Anspruch 1, **dadurch gekennzeichnet, dass** der Haltefinger (93) an dem Regalbediengerät (4) gelagert ist.

34. Regallager nach Anspruch 1, **dadurch gekennzeichnet, dass** das Regalbediengerät (4) bei jedem Ende seines Auflagers (64) einen Haltefinger (93) aufweist.

35. Regallager nach Anspruch 1, **dadurch gekennzeichnet, dass** der Abstand der Haltefinger (93) voneinander größer ist als die Länge eines Produktträgers (42).

36. Regallager nach Anspruch 1, **dadurch gekennzeichnet, dass** die beiden Haltefinger (93) miteinander gekoppelt sind.

## Claims

1. A shelf storage system (1)
having a multiplicity of shelf compartments (35), of which each is provided with a shelf floor (41) having an upper side, with at least a part of said shelf compartments (35) being provided with accesses lying in a common smooth surface,
having a multiplicity of product carriers (42) of which one is allocated to one said shelf compartment (35) respectively and each said product carrier (42) is provided with a support surface (47) for the to-be-stored products (48),
having a storage and retrieval unit (4), which is designed to be moved in front of each said shelf compartment (35),
having an actuating finger (74), which is borne moveable in longitudinal direction on said storage and retrieval unit (4) in such a manner that it is moveable perpendicular to said common smooth surface and
having couplings means (46, 77, 78) to couple said actuating finger (74) selectively to one of said product carriers (42),
wherein
a support (64) is provided on said storage and retrieval unit (4), which is designed to selectively receive said product carriers (42) or said products (48) directly,
said actuating finger (74) is turnable into at least three different positions in relation to said storage and retrieval unit (4), with said actuating finger (74) being in a first position in an idle position under said support (64) and in the active space of said support (64) in the other two positions, and
at least one moveably borne retaining finger (93) is provided, which can be moved into at least two positions, with in one of said positions said retaining finger (93) being in the moving path of at least one of said products (48) located on said product carrier (42) if said product carrier (42) is moved by said storage and retrieval unit (4) back into a respective shelf compartment (35).

2. A shelf storage system according to claim 1,
wherein all said product carriers (42) have the same depth measured perpendicular to a plane in which said storage and retrieval unit (4) moves when positioning from one said shelf compartment (35) to another said shelf compartment (35).

3. A shelf storage system according to claim 1,
wherein
- each said shelf compartment (35) is provided with shelf fixed guiding means (36, 37) for a respective product carrier (42),
- all said guiding means (36, 37) of all said shelf compartments (35) are identical,
- said product carriers (42) are provided with complementary guiding means (43, 44), and
- said support (64) is provided with guiding means (59, 62), which are designed to interact with said guiding means (44,45) of said product carriers (42).

4. A shelf storage system according to claim 1,
wherein all said shelf compartments (35) have the same depth measured perpendicular to the area in which said storage and retrieval unit (4) moves when positioning from one said shelf compartment (35) to another said shelf compartment.

5. A shelf storage system according to claim 1,
wherein said shelf-fixed guiding means (36,37) are designed by the geometry of the respective compartment floor (41).

6. A shelf storage system according to claim 1,
wherein said compartment floor (41) contains in the upper side thereof as said guiding means a guiding channel (35) running in the longitudinal direction of said compartment floor (41) and open at the top.

7. A shelf storage system according to claim 1,
wherein said compartment floor (41) has two plane surfaces (36, 37) which run V-shaped toward each other running the depth of said respective shelf compartment (35) in this relative arrangement.

8. A shelf storage system according to claim 1,
wherein said compartment floor (41) of each said shelf compartment (35) is formed solely by said two surfaces (36,37) running V-shaped toward each other.

9. A shelf storage system according to claim 1,
wherein said surfaces (36, 37) running V-shaped toward each other form a 90° angle.

10. A shelf storage system according to claim 1,
wherein a multiplicity of said shelf compartments (35) are arranged in a rack (17) and said rack (17) is borne in a moveable manner in said shelf rack (2).

11. A shelf storage system according to claim 1,
wherein two said racks (17) are located facing each other spaced apart and said storage and retrieval unit (4) is provided between said racks (17).

12. A shelf storage system according to claim 1,
wherein said product carriers (42) are designed in such a manner that they rest with their underside directly on said respective compartment floor (41).

13. A shelf storage system according to claim 1,
wherein the underside of said product carrier (42) is adapted to the upper side of said respective compartment floor (41).

14. A shelf storage system according to claim 1,
wherein said product carrier (42) is provided on the upper side thereof with a positioning means (47) to align and/or hold said products (48) located on said product carrier (42) aligned.

15. A shelf storage system according to claim 1,
wherein said product carrier (42) contains in the upper side thereof a receiving channel (47) running in longitudinal direction of said product carrier (42) and open at the top.

16. A shelf storage system according to claim 1,
wherein said product carrier (42) has two plane surfaces (43, 44) which run V-shaped toward each other running the length of said respective product carrier (42) in this relative arrangement.

17. A shelf storage system according to claim 1,
wherein said product carrier (42) of a respective said shelf compartment (35) is formed solely by said two surfaces (43, 44) running V-shaped toward each other.

18. A shelf storage system according to claim 1,
wherein said surfaces (43,44) running V-shaped toward each other form a 90° angle.

19. A shelf storage system according to claim 1,
wherein the length of said product carrier (42) is greater than the depth of said respective shelf compartment (35)

20. A shelf storage system according to claim 1,
wherein all said product carriers (42) are of the same length independent of the width of said respective shelf compartment (35) .

21. A shelf storage compartment according to claim 1,
wherein the length of a product carrier (42) is greater than the sum of at least two, preferably three medium-sized products (48), with the dimensions of said medium-sized product (48) being calculated from the average value of all said products (48).

22. A shelf system according to claim 1,
wherein said products (48) with the same dimensions are only taken into account once in calculating the average value.

23. A shelf storage system according to claim 1,
wherein said coupling means (46) at said product carrier (42) are formed by an opening or recess in the underside thereof.

24. A shelf storage system according to claim 1,
wherein said support (64) contains in the upper side thereof as a guiding means a guiding channel running in the longitudinal direction of said support (64) and open at the top, with said longitudinal direction being perpendicular to the surface along which said storage and retrieval (4) is to be moved.

25. A shelf storage system according to claim 1,
wherein said support (64) has two plane surfaces (59,62) which run V-shaped toward each other running the depth of said support (64) in this relative arrangement.

26. A shelf storage system according to claim 1,
wherein said support (64) is formed solely by said two surfaces (59,62) running V-shaped toward each other.

27. A shelf storage system according to claim 1,
wherein said surfaces (59,62) running V-shaped toward each other form a 90° angle.

28. A shelf storage system according to claim 1,
wherein said support (64) is longer than a product carrier (42).

29. A shelf storage system according to claim 1,
wherein said actuating finger (74) is turnable into a gap (65) of said support (64).

30. A shelf storage system according to claim 1,
wherein said actuating finger (74) may be brought into the three positions at each of the in-longitudinal-direction-lying ends of said support (64).

31. A shelf storage system according to claim 1,
wherein said actuating finger (74) is borne on said storage and retrieval unit (4) in such a manner that said actuating finger (74) can be moved forward into at least one position, in which said actuating finger (74) extends upwards over said support (64), up into said shelf compartment (35).

32. A shelf storage system according to claim 1,
wherein said coupling means of said actuating finger (74) is formed by at least one hook (77, 78).

33. A shelf storage system according to claim 1,
wherein said retaining finger (93) is borne on said storage and retrieval unit (4).

34. A shelf storage system according to claim 1,
wherein said storage and retrieval unit is provided at each end of said support (64) thereof with a retaining finger (93).

35. A shelf storage system according to claim 1,
wherein the distance between said retaining fingers (93) is greater than the length of a product carrier (42).

36. A shelf storage system according to claim 1,
wherein said two retaining fingers (93) are coupled to each other.

## Revendications

1. Des rayonnages (1)
- avec un nombre de compartiments d'étagère (35) dont chacun comporte un fond de compartiment (41) avec un côté supérieur, au moins une partie des compartiments d'étagère (35) présentant des entrées qui sont situées sur une surface lisse commune,
- avec un nombre de supports de produit (42) dont chacun est associé à un compartiment d'étagère (35) et chacun présente une surface d'appui (47) pour les produits (48) à stocker,
- avec un appareil de chargement d'étagère (4) qui est équipé pour être déplacé devant chacun des compartiments d'étagère (35),
- avec un doigt d'actionnement (47) qui est logé afin d'être déplacé de façon longitudinal le long de l'appareil de chargement d'étagère (4) de manière à pouvoir être déplacé de façon perpendiculaire par rapport à la surface lisse et
- avec des moyens de couplage (46, 77, 78) pour coupler de doigt d'actionnement (74) au choix avec un des supports de produit (42),
**caractérisé en ce que**
- un support (64) prévu sur l'appareil de chargement d'étagère (4) existe, lequel support est équipé pour recevoir directement au choix des supports de produits (42) ou des produits (48),
- le doigt d'actionnement (47) est susceptible d'être pivoté par rapport à l'appareil de chargement d'étagère (4) dans au moins trois positions différentes, lequel doigt se trouve dans la première position dans une position sans effet sous (64) le support et se trouve dans les deux autres positions dans la zone active du support et
- au moins un doigt d'arrêt (93) logé de façon mobile , lequel doit doit être déplacé dans au moins deux positions ; le doigt se trouvant dans une position dans le trajet de déplacement d'au moins un produit (48) situé sur le support de produit (42) lorsque le support de produit (42) est retourné à partir de l'appareil de chargement d'étagère (4) vers le compartiment d'étagère respectif.

2. Rayonnages selon la revendication 1, **caractérisés en ce que** tous les supports de produit (42) présentent la même profondeur, mesurée dans une direction perpendiculaire par rapport à un plan dans lequel se déplace l'appareil de chargement d'étagère lors du positionnement d'un compartiment d'étagère (35) vers un autre compartiment d'étagère (35).

3. Rayonnages selon la revendication 1, caractérisés en que chaque compartiment d'étagère (35) est équipé de moyens de guidage (36, 37) pour un support de produit (42) concerné, que les moyens de guidage (36, 37) de tous les compartiments d'étagère (42) sont identiques entre eux , que les supports de produits (42) sont pourvus de moyens de guidage complémentaires (43, 44) et en ce que le support (64) est pouvu des moyens de guidage (59, 62) qui sont prévus pour coopérer avec les moyens de guidage (44, 45) des supports de produits (42).

4. Rayonnages selon la revendication 1, caractérisés en que tous les compartiments d'étagère (35) présentent la même profondeur mesurée dans une direction perpendiculaire par rapport à un plan dans lequel se déplace l'appareil de chargement d'étagère lors du positionnement d'un compartiment d'étagère (35) vers un autre compartiment d'étagère (35).

5. Rayonnages selon la revendication 1, caractérisés en que le moyen de guidage (36, 37) fixe par rapport à l'étagère est formé grâce à une géométrie du fond de compartiment (41) respectif.

6. Rayonnages selon la revendication 1, caractérisés en que le fond de compartiment (41) comporte dans son côté supérieur comme moyen de guidage, une goulotte de guidage s'étendant en direction longitudinale du fond de compartiment (41) et étant ouvert vers le haut.

7. Rayonnages selon la revendication 1, caractérisés en que le fond de compartiment (41) comporte deux surfaces (36, 37) planes , qui s'étendent en forme de V l'une par rapport à l'autre et qui traversent cette profondeur du compartiment d'étagère respectifs (35) avec cette association.

8. Rayonnages selon la revendication 1, caractérisés en que le fond de compartiment (41) d'un compartiment d'étagère respectif (35) est formé par les surfaces (36, 37) s'étendant sous la forme d'un V l'une par rapport à l'autre.

9. Rayonnages selon la revendication 1, caractérisés en que les surfaces (36, 37) s'étendant sous la forme de V l'une par rapport à l'autre forment un angle de 90° l'une par rapport à l'autre.

10. Rayonnages selon la revendication 1, caractérisés en que plusieurs compartiments d'étagère (35) sont disposés dans un échafaud (17) et en ce que l'échafaud (17) est logé de façon mobile dans l'échafaud d'étagère (4).

11. Rayonnages selon la revendication 1, caractérisés en que deux échafauds (17) sont disposés éloignés l'un en face l'autre et en ce que l'appareil de chargement d'étagère (4) est prévu entre les échafauds (17).

12. Rayonnages selon la revendication 1, caractérisés en que les supports de produits (42) sont réalisés de manière à ce que le côté inférieur se trouve posé directement sur le fond de compartiment (41) respectif.

13. Rayonnages selon la revendication 1, caractérisés en que le côté inférieur du support de produit (42) est adapté au côté supérieur du fond de compartiment (41) associé.

14. Rayonnages selon la revendication 1, caractérisés en que le support de produit (42) comporte sur son côté supérieur des moyens de positionnement (47) pour orienter les produits (48) se trouvant sur le support de produit (42) et / ou les maintenir orientés.

15. Rayonnages selon la revendication 1, caractérisés en que le support de produit (42) comporte sur son côté supérieur une goulotte de réception (47) s'étendant en direction longitudinale du support de produit (42) et est ouvert vers le haut.

16. Rayonnages selon la revendication 1, caractérisés en que le support de produit (42) comporte deux surfaces planes (43, 44) s'étendant sous la forme d'un V et qui traversent la largeur du support de produit (42) respectif avec cette association relative.

17. Rayonnages selon la revendication 1, caractérisés en que le support de produit (42) d'un compartiment d'étagère (35) concerné est formé uniquement par les deux surfaces (43, 44) s'étendant sous la forme d'un V l'une par rapport à l'autre.

18. Rayonnages selon la revendication 1, caractérisés en que les surfaces (43, 44) s'étendant sous la forme de V l'une par rapport à l'autre forment un angle de 90° l'une par rapport à l'autre.

19. Rayonnages selon la revendication 1, caractérisés en que la longueur du support de produit (42) est plus grande que la profondeur du compartiment d'étagère associé.

20. Rayonnages selon la revendication 1, caractérisés en que tous les supports de produits (35) présentent la même longueur, indépendamment de la largeur du compartiment d'étagère concerné (35).

21. Rayonnages selon la revendication 1, caractérisés en que la largeur d'un support de produit (42) est plus grande que la somme d'au moins deux, de préférence trois produits (48) de tailles moyennes , les dimensions du produit (48) à taille moyenne étant calculées à partir de la moyenne de tous les produits (48).

22. Rayonnages selon la revendication 1, caractérisés en que des produits (48) des mêmes tailles ne sont pris en compte qu'une fois pour le calcul de la moyenne.

23. Rayonnages selon la revendication 1, caractérisés en que les moyens de couplage (46) sur le support de produit (42) sont formés par une ouverture ou un évidement sur le côté inférieur dudit support.

24. Rayonnages selon la revendication 1, caractérisés en que le support (64) comporte sur son côté supérieur comme moyen de guidage, une goulotte de guidage s'étendant en direction longitudinale du support (64) et ouvert vers le haut ; la direction longitudinale étant perpendiculaire par rapport à la surface, le long de laquelle on peut déplacer l'appareil de chargement d'étagère (4).

25. Rayonnages selon la revendication 1, caractérisés en que le support (64) comporte deux surfaces (59, 62) planes qui s'étendent sous la forme d'un V l'une par rapport à l'autre et qui traversent la profondeur du support (64) avec cette association.

26. Rayonnages selon la revendication 1, caractérisés en que le support (64) est formé seulement par les deux surfaces s'étendant l'une par rapport à l'autre sous la forme de V

27. Rayonnages selon la revendication 1, caractérisés en que les surfaces (59, 62) s'étendant sous la forme de V l'une par rapport à l'autre forment un angle de 90° l'une par rapport à l'autre.

28. Rayonnages selon la revendication 1, caractérisés en que le support (64) est plus long qu'un support de produit (42).

29. Rayonnages selon la revendication 1, caractérisés en que l'on peut pivoter le doigt d'actionnement (74) dans une fente (65) du support (64).

30. Rayonnages selon la revendication 1, caractérisés en que l'on doit transférer le doigt d'actionnement (74) à chaque extrémité du support (64) située en direction longitudinale vers les trois positions.

31. Rayonnages selon la revendication 1, caractérisés en que le doigt d'actionnement (74) est logé sur l'appareil de chargement d'étagère (4) de manière à pouvoir être avancé vers au moins une position dans laquelle il faut saillie vers le haut sur le support (64).

32. Rayonnages selon la revendication 1, caractérisés en que le moyen de couplage (74) est formé par au moins un crochet (77, 78).

33. Rayonnages selon la revendication 1, caractérisés en que le doigt d'arrêt (93) est logé sur l'appareil de chargement d'étagère (4).

34. Rayonnages selon la revendication 1, caractérisés en que l'appareil de chargement d'étagère (4) présente sur toute extrémité de son support (64) un doigt d'arrêt 93.

35. Rayonnages selon la revendication 1, caractérisés en que la distance des doigt d'arrêts (93) l'une par rapport à l'autre est plus grande que la longueur d'un support de produit (42).

36. Rayonnages selon la revendication 1, caractérisés en que les deux doigts d'arrêt (93) sont couplés entre eux .
